Europäisches Patentamt

European Patent Office

Office européen des brevets

(11) Veröffentlichungsnummer: **0 460 435 A2**

(12) **EUROPÄISCHE PATENTANMELDUNG**

(21) Anmeldenummer: **91107928.3**

(22) Anmeldetag: **16.05.91**

(51) Int. Cl.5: **G01N 27/414**

(30) Priorität: **02.06.90 DE 4017905**

(43) Veröffentlichungstag der Anmeldung:
**11.12.91 Patentblatt 91/50**

(84) Benannte Vertragsstaaten:
**AT BE CH DE DK ES FR GB IT LI NL SE**

(71) Anmelder: **BASF Aktiengesellschaft**
**Carl-Bosch-Strasse 38**
**W-6700 Ludwigshafen(DE)**

(72) Erfinder: **Schwiegk, Stefan**
**Am Sonnigen Hang 2**
**W-6500 Mainz(DE)**
Erfinder: **Mathauer, Klemens**
**Rheinallee 85**
**W-6500 Mainz(DE)**
Erfinder: **Wegner, Gerhard, Prof. Dr.**
**Carl-Zuckmayer-Strasse 1**
**W-6500 Mainz-Drais(DE)**
Erfinder: **Hoffmann, Bernd F.W., Prof. Dr.**
**Am Gestade 7**
**W-7512 Rheinstetten 2(DE)**
Erfinder: **Albrecht, Vogel**
**Glogauer Strasse 16**
**W-7500 Karlsruhe 1(DE)**

(54) **Referenzelektrode für chemische Sensoren.**

(57) Die Erfindung betrifft eine Referenzelektrode für chemische Sensoren auf Basis ionenselektiver Feldeffekt-Transistoren (CHEMFETs) in einem Elektrolyt/Isolator/Halbleiter (EIS)-System. Die Referenzelektrode besteht im wesentlichen aus einem mit Polyglutamat beschichteten Isolator/Halbleiter-Substrat oder aus einem mit Polyglutamat überschichteten Phthalocyaninato-Polysiloxan-Polymerfilm, der auf einem Isolator/Halbleiter-Substrat angebracht ist.

EP 0 460 435 A2

Die Erfindung betrifft eine Referenzelektrode für chemische Sensoren auf Basis ionenselektiver Feldeffekt-Transistoren (CHEMFETs), die dünne Filme auf Isolator/Halbleiter-Substraten in einem Elektrolyt/Isolator/Halbleiter (EIS)-System enthalten. Diese Referenzelektrode ist auf vorteilhafte Weise herstellbar und kann auch als integrierter Bestandteil in einem EIS-System eingesetzt werden.

Die Gestaltung integrierter chemischer Sensoren auf Basis ionenselektiver Feldeffekt-Transistoren ist bekannt und wird beispielsweise von J. Janata und R. J. Huber in Solid State Chemical Sensors, Academic Press, New York, 1985, Ch. 2, p. 66 und Ch. 3 sowie von A. Sibbald, Recent advances in field-effect chemical microsensors, J. Mol. Electron., 2 (1986) 51 bis 83 beschrieben. Die Verwendung von CHEMFETs als online-Sensoren zur Kontrolle chemischer Prozesse wird durch einige noch ungelöste Probleme verhindert, besonders durch mangelnde Langzeitstabilität und geringe Adhäsion der chemisch sensitiven Schicht. Vor einigen Jahren wurden Langmuir-Blodgett-Filme (LB Filme) (vgl. J. Am. Chem. Soc., 57 (1935) 1007 - 1022) als Alternative zu den üblicherweise verwendeten konventionell aufgebrachten Polymeren, wie PVC oder Polyvinylalkohol (vgl. G.G. Roberts, An applied science perspective of Langmuir-Blodgett films, Adv. Phys., 34 (1985) 1-38) vorgeschlagen. Übliche LB-Filme amphiphiler Stoffe weisen jedoch die gleichen Stabiltätsprobleme auf. Vor kurzem wurden nun mit LB-Filmen von Phthalocyaninato-Polysiloxan-Polymeren ein Stoff gefunden, der sich als ionensensitiver Teil in Elektrolyt/Isolator/Halbleiter-(EIS)-Strukturen hinsichtlich Langzeitstabilität und Empfindlichkeit für Protonen als sehr vorteilhaft erwiesen hat und gegenüber Alkalimetallionen keine Querempfindlichkeit zeigt (vgl. A. Vogel, B. Hoffmann, Th. Sauer und G. Wegner: Langmuir-Blodgett Films of Phthalocyaninato-Polysiloxane Polymers as a novel Type of CHEMFET Membrane; Sensors and Actuators, Vol. B1 (1990) S. 408-412; Elsevier Sequoia/Printed in the Netherlands). Aufgabe der vorliegenden Erfindung ist es eine für dieses System geeignete Referenzelektrode aufzuzeigen.

Überraschenderweise wurde gefunden, daß es gelingt, diese Aufgabe dadurch zu lösen, daß entweder das Isolator/Halbleiter-Substrat direkt mit einer Polyglutamatschicht beschichtet wird oder ein auf dem Isolator/Halbleiter-Substrat aufgebrachte Phthalocyaninato-Polysiloxan-Polymer-Film mit einer Polyglutamatschicht versehen wird.

Gegenstand der vorliegenden Erfindung ist daher eine Referenzelektrode für chemische Sensoren auf Basis ionenselektiver Feldeffekt-Transistoren (CHEMFETs), die Isolator/Halbleiter-Substrate oder mit dünnen Filmen von Phthalocyaninato-Polysiloxan-Polymeren beschichtete Isolator/Halbleiter-Substrate in einem Elektrolyt/Isolator/Halbleiter (EIS)-System enthalten, die dadurch gekennzeichnet ist, daß die Referenzelektrode im wesentlichen aus einem mit Polyglutamat beschichteten Isolator/Halbleiter-Substrat oder einem mit Polyglutamat überschichteten Phthalocyaninato-Polysiloxan-Polymerfilm, der auf einem Isolator/Halbleiter-Substrat angebracht ist, besteht.

Zur Herstellung der erfindungsgemäßen Referenzelektrode wird das Polyglutamat vorzugsweise nach der Langmuir-Blodgett-Technik auf das Isolator/Halbleiter-Substrat oder auf den auf einem Isolator/Halbleiter-Substrat angebrachten Phthalocyaninato-Polysiloxan-Polymerfilm aufgebracht.

Als Polyglutamat wird vorzugsweise ein Poly-γ-methyl-L-glutamat oder bei Anwendung der Langmuir-Blodgett-Technik insbesondere ein Poly-(γ-methyl-L-glutamat-co-γ-n-alkyl-L-glutamat), worin n-Alkyl für $C_{10}H_{21}$ bis $C_{25}H_{51}$ steht und der n-Alkyl-L-glutamat-Anteil zwischen 20 und 40 % ist, eingesetzt.

Bevorzugt ist außerdem, das Polyglutamat in einer Schichtdicke von 3,6 bis 180 nm, insbesondere 7,2 bis 54 nm auf das Isolator/Halbleiter-Substrat, bzw. auf den Phthalocyaninato-Polysiloxan-Polymerfilm aufzubringen.

Als Isolator/Halbleiter-Substrat kommt vorzugsweise ein $SiO_2$/Si-Substrat in Betracht.

Ein besonderer Vorteil der erfindungsgemäßen Referenzelektrode ist es, die Referenzelektrode als integrierten Bestandteil eines, gegebenenfalls mit einem ionenempfindlichen Film, beispielsweise mit Phthalocyaninato-Polysiloxan-Polymerfilm beschichteten Isolator/Halbleiter-Substrats, insbesondere eines $SiO_2$/Si-Substrats, in einem EIS-System einzusetzen.

Die erfindungsgemäße Referenzelektrode zeichnet sich besonders dadurch aus, daß sie im Aufbau einem sensoraktiven EIS-System gleicht, mit dem einzigen Unterschied, daß die sensitive Schicht des sensoraktiven Systems durch den ionenunempfindlichen Polyglutamatfilm zu ersetzen ist. Dies ermöglicht eine wesentliche Vereinfachung in EIS-Systemen und deren Eignung zur Steuerung chemischer Prozesse.

Zum Aufbau der erfindungsgemäßen Referenzelektroden ist im einzelnen folgendes auszuführen.

In Fig. 1 ist der prinzipielle Aufbau eines (EIS)-Systems schematisch dargestellt. Darin bedeuten 1 = Elektrolyt; 2 = Elektrolytgefäß; 3 = Abdichtung; 4 = Isolator (z.B. $SiO_2$); 5 = Halbleiter (z.B. p-Silizium), 6 = Metallisierung (z.B. Gold oder Aluminium).

In Fig. 2 ist ein erfindungsgemäßes EIS-System schematisch dargestellt, in dem 7 = Polyglutamatfilm bedeutet und die Zahlen 1 bis 6 die in Fig. 1 angegebene Bedeutung haben.

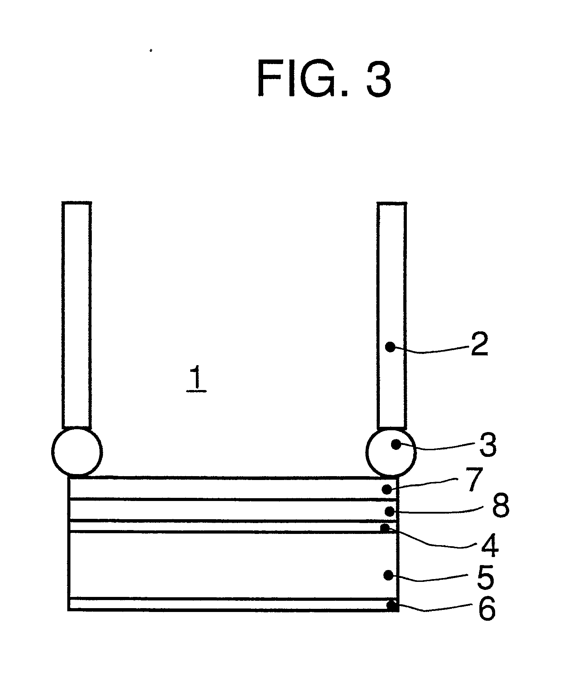

In Fig. 3 ist ein weiteres erfindungsgemäßes EIS-System schematisch dargestellt, in dem 8 = Phthalocyaninatopolysiloxanfilm bedeutet, der mit einem Polyglutamatfilm = 7 bedeckt ist.

Fig. 4 zeigt schematisch den Test eines EIS-Systems nach Fig. 3 durch Messung gegen eine herkömmliche Ag/AgCl-Referenzelektrode, wobei 9 = elektrische Kontaktierung zum Messen der Kapazität bei verschiedener Vorspannung (C/U-Kurven) und 10 = Silber/Silberchlorid-Referenzelektrode bedeuten.

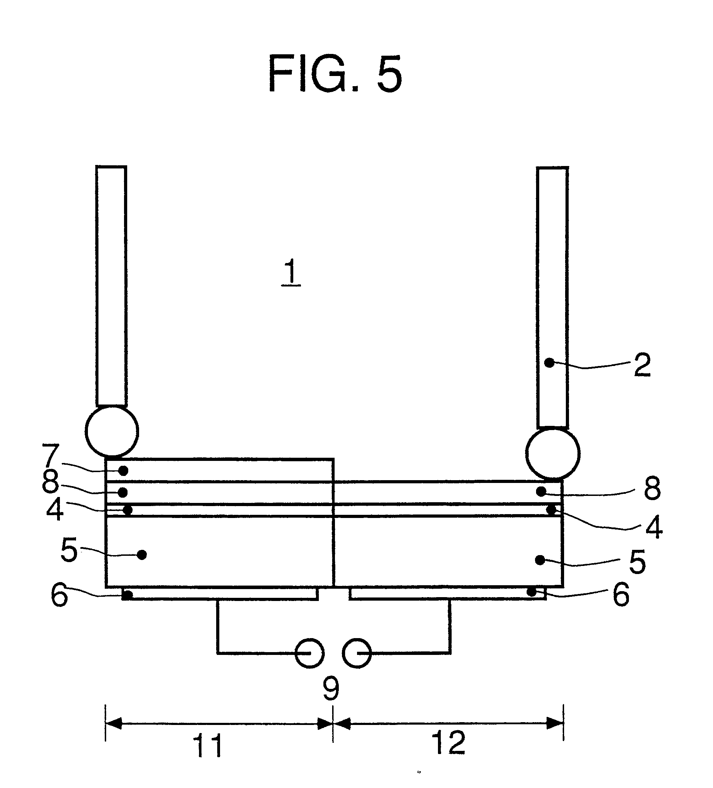

Fig. 5 zeigt schematisch eine serielle Kombination aus pH-sensitivem und Referenz-EIS-System, worin mit 11 der Referenzteil des EIS-Systems und mit 12 der pH-sensitive Teil des EIS-Systems gekennzeichnet ist.

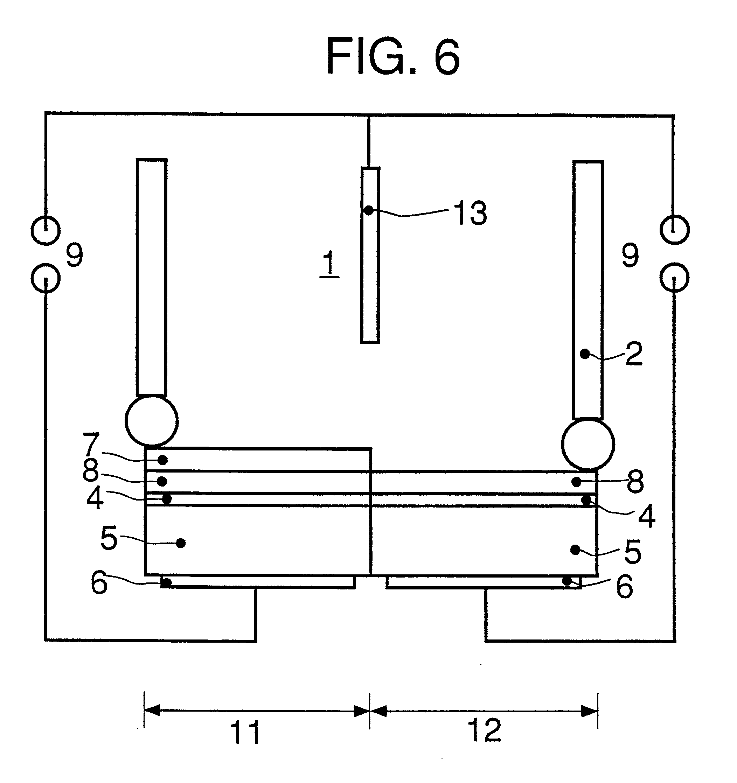

Fig. 6 zeigt schematisch eine parallele Kombination aus pH-sensitivem und Referenz-EIS-System, worin die Zahlen 1 bis 12 die oben angegebene Bedeutung haben und 13 = einen in den Elektrolyten eintauchenden Platindraht bedeutet.

Fig. 7 zeigt schematisch den Aufbau einer Phthalocyaninatopolysiloxansequenz, worin R für $C_nH_{2n+1}$ mit n = 1 bis 5 und R' für $C_nH_{2n+1}$ mit n = 5 bis 10 stehen, vorzugsweise mit der Maßgabe, daß R ≠ R'; beispielsweise R = Methyl, R' = Octyl. Der Phtahlocyaninatopolysiloxan-Polymerfilm kann durch Aufschleudern seiner Lösung (= Spincoating) oder vorzugsweise nach der Langmuir-Blodgett-Technik auf die Isolatorschicht des EIS-Systems, beispielsweise in einer Schichtdicke zwischen 2 und 200 nm aufgetragen werden.

Die Langmuir-Blodgett-Technik, die dazu geeigneten Apparaturen und die Voraussetzungen für die Durchführbarkeit dieser Methode sind bekannt und beispielsweise beschrieben in G.L. Gaines, "Insoluble Monolayers at Liquid-Gas-Interfaces", Interscience Publishers, 1966.

Bei Anwendung der Langmuir-Blodgett-Technik wird das Phthalocyaninatopolysiloxan im allgemeinen als verdünnte Lösung (0,001 bis 0,5 %ig) beispielsweise als 0,05 %ige Lösung in einem Halogen-Kohlenwasserstoff, wie z.B. Chloroform auf einer Wassersubphase in einer Lauda-Filmwaage gespreitet und in üblicher Weise (Abdunsten des Lösungsmittels, Kompression auf 25 mN/m Oberflächenspannung bis zum Erreichen einer konstanten Filmfläche und anschließendes Übertragen der gewünschten Anzahl von Monoschichten durch Ein- und Austauchen des zu beschichtenden Substrats weiterverarbeitet.

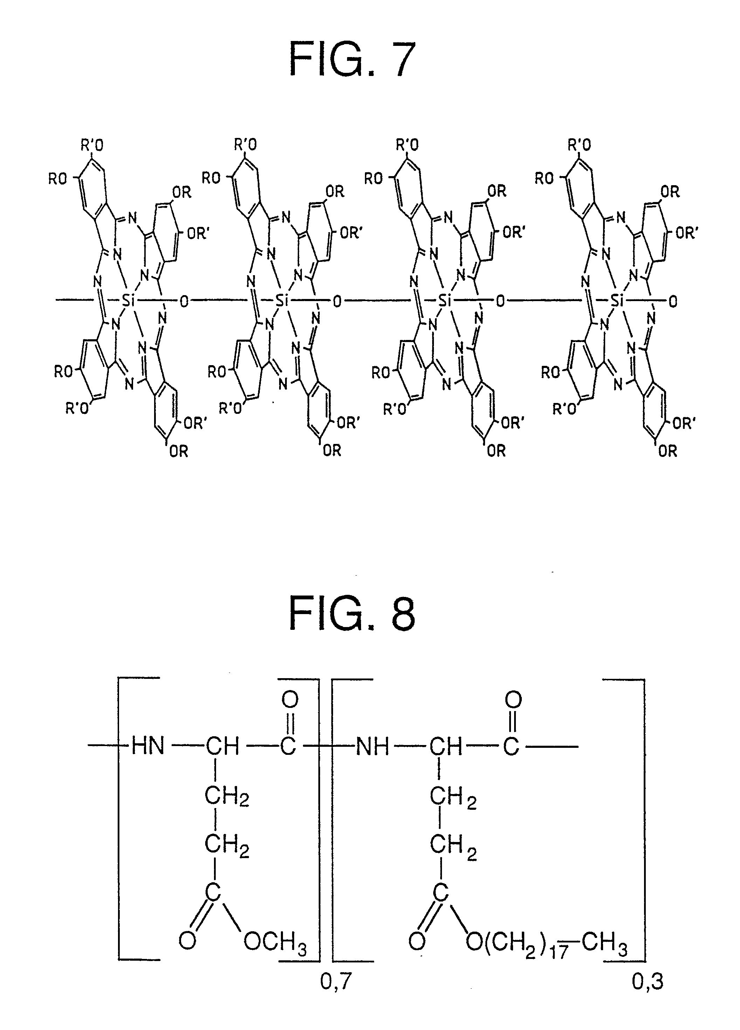

Fig. 8 zeigt als Beispiel für ein bevorzugtes Polyglutamat Poly(γ-methyl-L-glutamat-co-γ-n-octadecyl-L-glutamat), worin 70 Mol-% γ-Methyl-L-glutamateinheiten und 30 Mol-% γ-n-Otadeyl-L-glutamateinheiten enthalten sind. Bevorzugte Poly(γ-methyl-L-glutamat-co-γ-n-alkyl-L-glutamate) sind auch solche, in denen n-Alkyl für $C_{10}H_{21}$ bis $C_{25}H_{51}$ steht und der n-Alkyl-L-glutamat-Anteil zwischen 20 und 40 Mol-% beträgt. Diese Copolyglutamate können mit beliebigem Polymerisationsgrad, vorzugsweise mit einem Polymerisationsgrad von 20 bis 2000 eingesetzt werden, wobei eine helikale Struktur bevorzugt ist. Diese Copolyglutamate lassen sich besonders vorteilhaft mittels der Lanmuir-Blodgett-Technik auf die zu beschichtenden Substrate auftragen. Dazu werden sie im allgemeinen in geeigneten organischen Lösungsmitteln, vorzugsweise in Halogen-Kohlenwasserstoffen, wie z.B. Chloroform gelöst, wobei die Konzentration des Polyglutamats im Lösungsmittel zweckmäßigerweise im Bereich von 0,001 bis 0,1 %, beispielsweise bei etwa 0,02 % liegt. Auch im Falle der Copolyglutamate wird an einer Lauda-Filmwaage gearbeitet, an der durch eine Laminarflowbox eine Reinstraumatmosphäre erzeugt wird. Die Copolyglutamatlösung wird auf einer thermostatisierten Reinstwassersubphase gespreitet, nach Abdunsten des Lösungsmittels auf 20 mN/m Oberlächenspannung komprimiert und nach Erreichen einer konstanten Filmfläche das zu beschichtende Substrat zweckmäßigerweise durch einen Lauda-Filmlift mit einer Geschwindigkeit von 10 mm/Minute durch den Polymerfilm in die Subphase getaucht. Beim Ein- und Austauchen wird so jeweils eine Monoschicht übertragen. Nach dem Übertragen der gewünschten Anzahl von Monoschichten, die zwischen 10 und 30 liegen kann, wird das Substrat getrocknet und gegebenenfalls getempert. Für den Fall, daß ebenfalls geeignete Homopolyglutamate, wie z.B. Poly(γ-methyl-L-glutamat) oder Poly(γ-benzyl-glutamat) zur Beschichtung des Isolator/Halbleiter-Substrats oder zur Überschichtung eines mit Phthalocyaninato-Polysiloxan-Polymerfilm versehenen Isolator/Halbleiter-Substrats eingesetzt werden, erfolgt dies zweckmäßigerweise durch Aufschleudern (= Spincoating; bei 500 bis 2000 U/Minute) und anschließende Entfernung des Lösungsmittels. Auch auf diese Weise lassen sich entsprechend dünne und wirksame Schichten erzeugen.

Die Herstellung geeigneter Polyglutamate und Copolyglutamate kann beispielsweise der EP-A 03 00 420 entnommen werden.

Die Polyglutamate können also sowohl durch Aufschleudern ihrer Lösungen oder vorzugsweise nach der Langmuir-Blodgett-Technik auf die Isolatorschicht oder die mit einem Phthalocyaninatopolysiloxan-Polymerfilm beschichtete Isolatorschicht des EIS-Systems aufgetragen werden. Die Schichtdicke der Polyglutamatschicht kann 3,6 bis 180, vorzugsweise 7,2 bis 54 nm betragen.

Die erfindungsgemäß aufgebrachten Polyglutamatschichten zeichnen sich durch hohe Haftfestigkeit und Alterungsbeständigkeit aus. Die erfindungsgemäße Referenzelektrode eignet sich insbesondere dazu, zusammen mit einer nach derselben Technologie hergestellten pH-sensitiven EIS-Struktur (EIS-Kapazität oder ISFET) einen integrierten pH-Sensor aufzubauen.

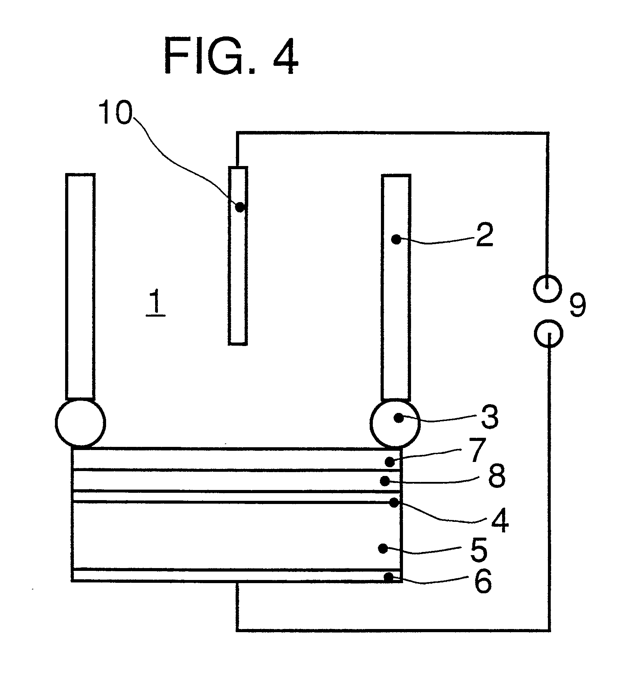

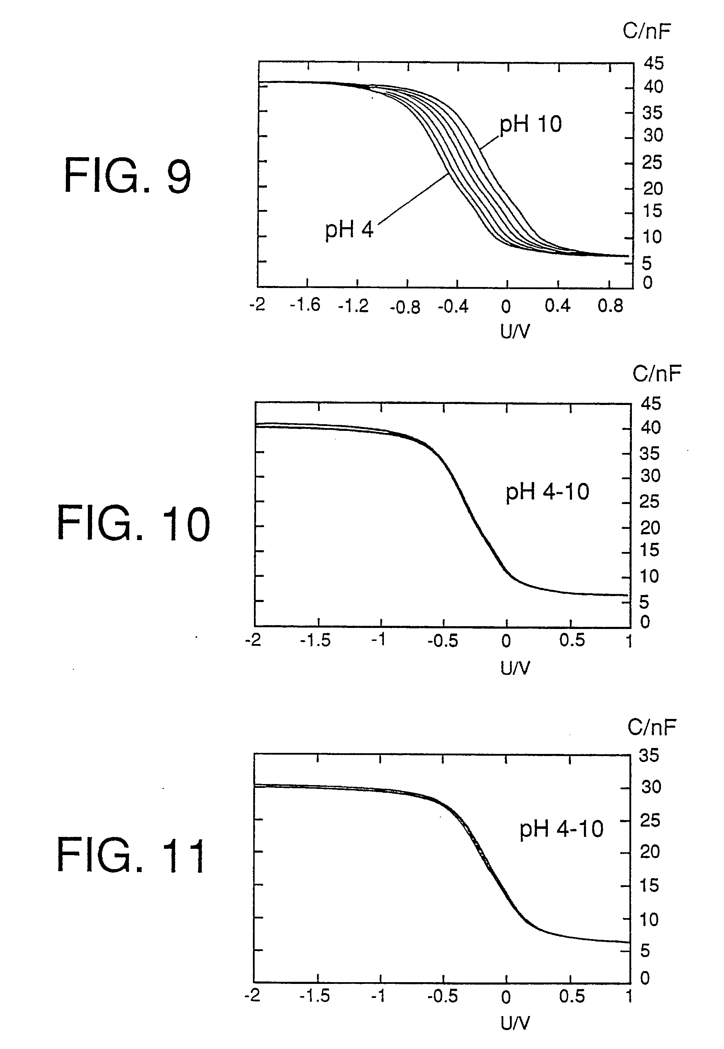

Fig. 9 zeigt die C/U-Kurven (gemessen in nF/V) in Abhängigkeit vom pH-Wert der Elektrolytlösung in einem EIS-System gemäß Fig. 4 mit 20 LB-Schichten Polycyaninatopolysiloxan (8), jedoch ohne Polyglutamatschicht (7).

Fig. 10 zeigt die C/U-Kurven (gemessen in nF/V) in Abhängigkeit vom pH-Wert der Elektrolytlösung in einem EIS-System gemäß Fig. 4 mit 20 LB-Schichten Polyglutamat (7), jedoch ohne Phthalocyaninatopolysiloxan (8).

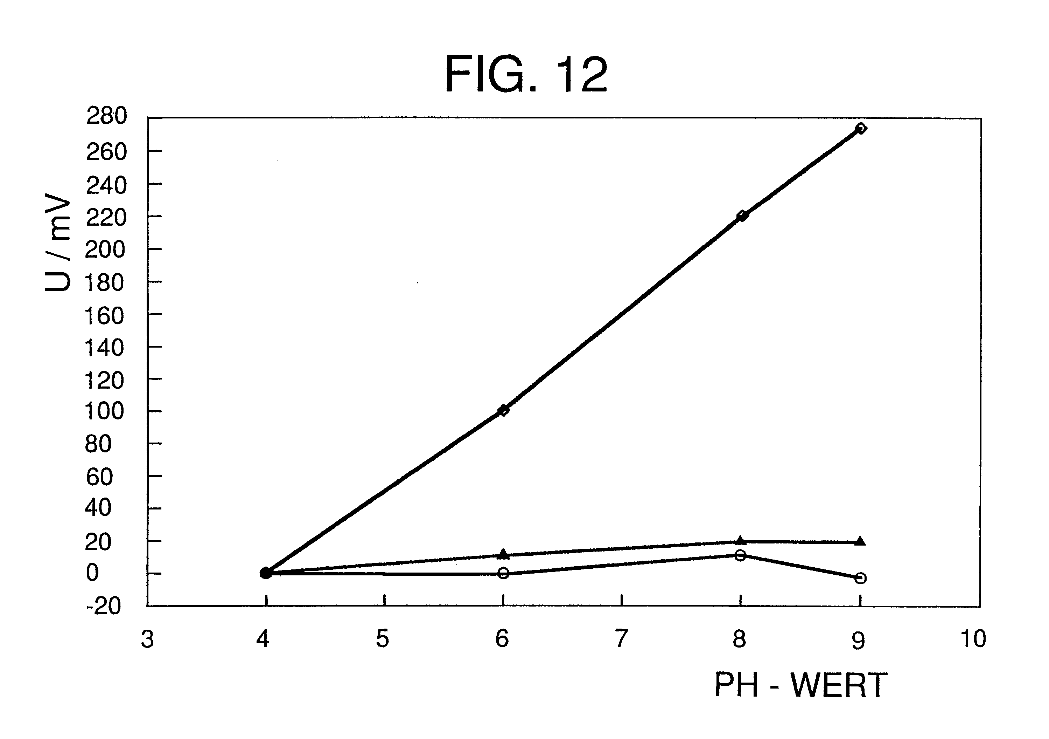

Fig. 11 zeigt die C/U-Kurven (gemessen in nF/V) in Abhängigkeit vom pH-Wert der Elektrolytlösung in einem EIS-System gemäß Fig. 4, wobei die Isolatorschicht (4) zunächst mit 12 LB-Schichten Phthalocyaninato-Polysiloxan-Polymer (8) beschichtet und dann mit 30 LB-Schichten Polyglutamat (7) bedeckt wurde.

In Fig. 12 ist die pH-Empfindlichkeit verschiedener EIS-Systeme dargestellt. Darin bedeutet ◊ das EIS-System nach Fig. 9; ▲ das EIS-System nach Fig. 10; O das EIS-System nach Fig. 11.

Als Halbleiter/Isolator-Substrate für die erfindungsgemäßen Referenzelektroden eignen Silizium/$SiO_2$, $Si_xN_y$/$SiO_2$ (mit vorzugsweise x = 3 und y = 4), $ZrO_2$/$SiO_2$, Germanium/$GeO_2$ sowie III-V-Halbleiter wie z.B. GaAs, GaInP mit isolierenden Schichten anstelle eines Oxids. Bevorzugtes Halbleiter/Isolatorsubstrat ist Si/$SiO_2$, insbesondere p-Silizium/$SiO_2$, beispielsweise p-dotierte Siliziumwafer mit einem spezifischen Widerstand von 17 bis 30 $\Omega \cdot$cm mit einer $SiO_2$-Schichtdicke von 50±5 nm.

Zu den besonderen Vorteilen der erfindungsgemäßen Referenzelektrode gehört, daß sie pH-unempfindlich, mechanisch unempfindlich und miniaturisierbar ist und ihre Herstellung zur Standard-Silizium-Technologie kompatibel ist. Die erfindungsgemäße Referenzelektrode ermöglicht daher den Aufbau integrierter pH-Sensoren sowie pH-Messungen bei tiefen Temperaturen (T < 0°C).

Die in den Beispielen genannten Teile und Prozente sind, soweit nicht anders angegeben, Gewichtsteile bzw. Gewichtsprozente.

Beispiel 1

Präparation einer Referenz-EIS-Struktur mit einem Polglutamatfilm:

Es wurden p-dotierte Siliziumwafer mit einem spezifischen Widerstand von 17 bis 30 $\Omega \cdot$cm und

einer $SiO_2$-Schichtdicke von 50±5 nm verwendet. Die Probengröße betrug 15 mal 15 mm. Zur Reinigung wurden die Wafer sukzessive mit folgenden Lösungen jeweils bei 40°C im Ultraschallbad behandelt: zunächst mit Aceton zur Entfernung des Photolacks (10 Minuten); dann wurden sie mit Reinstwasser gespült und anschließend mit einer Mischung aus $H_2SO_4$, $H_2O_2$ und $H_2O$ im Verhältnis 1:1:5 (10 Minuten) behandelt, mit Reinstwasser gespült, dann mit einer Mischung aus 25%igem $NH_3$, 30%igem $H_2O_2$ im Verhältnis 1:1:5 (60 Minuten) behandelt, mit Reinstwasser gespült, dann mit 10%iger HCl (2 Minuten) behandelt, mit Reinstwasser gespült und schließlich im Trockenschrank bei 50°C getrocknet.

Die hierzu verwendeten Chemikalien waren p.A. Qualität, das benötigte Reinstwasser wurde durch eine Reinstwasseranlage (Seral pro 90 C) gewonnen.

Zum Hydrophobisieren der Wafer wurden die gereinigten Substrate 10 Minuten in einer 40%igen Lösung von Hexamethyldisilazan in Chloroform bei 40°C silanisiert.

Herstellung der LB-Schicht:

Es wurde an einer Lauda Filmwaage gearbeitet, an der durch eine Laminarflowbox eine Reinstraumatmosphäre erzeugt wurde. Die Reinstwassersubphase wurde extern auf 18°C thermostatisiert. Das Polyglutamat [Poly(γ-methyl-L-glutamat-Co-γ-n-Octadecyl-L-glutamat) Polymerisationsgrad 2000] wurde aus einer sehr verdünnten Lösung (0,02%ig) in Chloroform gespreitet. Nach Kompression auf 20 mN/m Oberflächenspannung, wurde das Erreichen einer konstanten Filmfläche abgewartet. Anschließend wurde das Substrat mittels eines Filmlifts mit einer Geschwindigkeit von 10 mm/Min. durch den Polymerfilm in die Subphase getaucht. Dabei wurden bei Ein- und Austauchen jeweils eine Monoschicht übertragen. Nach dem übertragen von 30 Monoschichten wurde das Substrat getrocknet.

Dann wurde der Polyglutamat-_Film 30 Minuten bei 100°C getempert und die Metallisierung aufgebracht; dazu wurde der Siliziumwafer an der p-Silizium-Seite vom Polyglutamatfilm befreit und dort durch sukzessives Aufdampfen von Aluminium und Gold metallisiert.

Meßaufbau:

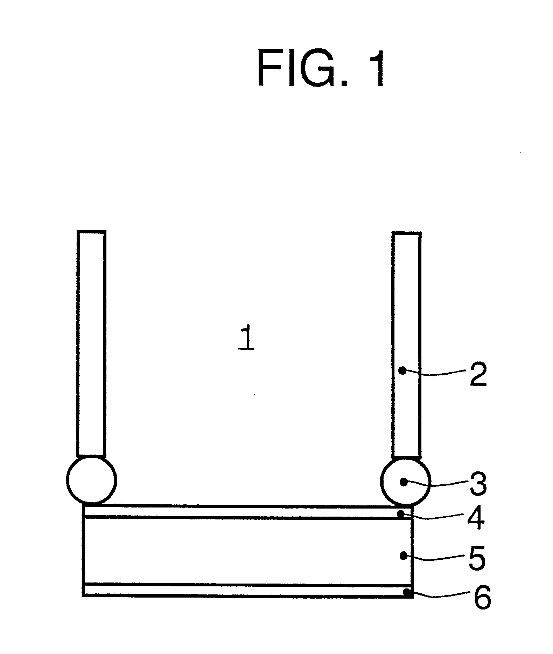

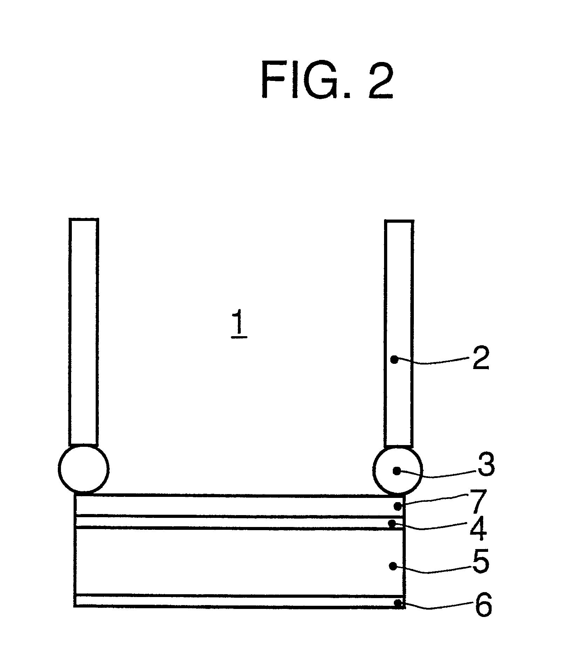

Die Meßzelle besteht aus einem Teflongefäß mit ca. 1 ml Elektrolytvolumen (vgl. Fig. 1 und Fig. 2). Als Referenzelektrode wurde eine Ag/AgCl/1 M KCl Mikroreferenzelektrode der Fa. Ingold verwendet. Der ganze Meßaufbau wurde in einer Metallschirmbox installiert, als Verbindung zu den Meßgeräten wurden Koaxialkabel verwendet.

Die C/U Kurven wurden mit einem Hewlett-Packard 4272A LCR-Meter gemessen. Dabei wurde als Vorspannung ein Bereich von -2 bis + 1 Volt in Schritten von 50 mV durchfahren. Die Kapazität wurde durch eine überlagerte Wechselspannung (10 mV, 1 kHz) gemessen. Gesteuert wurde der Versuch über einen Apple II Mikrocomputer.

Die Messung erfolgte wie folgt:

Als Elektrolytlösungen wurden sukzessive handelsübliche Standard pH-Pufferlösungen vermessen, welchen zuvor 0,1 mol/KCl als Leitsalz zugesetzt worden war. Als Pufferlösungen kommen beispielsweise solche auf Basis Citrat/HCl, Borat/HCl bzw. Phosphat in Betracht. Die Messungen wurden von pH 4 bis pH 10 in Schritten von einer pH-Einheit durchgeführt. Die Meßergebnisse sind in Fig. 10 und 11 dargestellt.

Beispiel 2

Herstellung einer Referenz EIS-Struktur mit einem Phthalocyaninatopolysiloxanpolymerfilm, bedeckt mit einer Polyglutamatschicht:

Von der in Beispiel 1 beschriebenen Referenzelektrode unterscheidet sich diese durch einen zusätzlichen LB-Film von Phthalocyaninatopolysiloxanpolymer. Die Präparation wird analog Beispiel 1 durchgeführt, vor dem Aufbringen des Polyglutamat-LB-Films wird mittels der oben beschriebenen Filmwaage ein Phthalocyaninatopolysiloxanpolymerfilm auf den gereinigter Wafer aufgebracht. Dazu wird die Subphasentemperatur auf 6 °C erniedrigt und Phthalocyaninatopolysiloxanpolymer (Polymerisationsgrad 100) aus einer verdünnten Lösung (0,05 %) in Chloroform gespreitet. Nach Kompression auf 25 mN/m wird das Erreichen einer konstanten Filmfläche abgewartet.

Anschließend wird das Substrat durch den oben beschriebenen Filmlift mit 10 mm/Min. in die Subphase ein- und wieder ausgetaucht. Dabei wird jeweils eine Monoschicht übetragen. Nachdem 12 Monoschichten übertragen wurden, wurde das Substrat getrocknet und anschließend 30 Minuten bei 120 °C getempert.

Anschließend wurden analog zu Beispiel 1 30 Monoschichten Polyglutamat aufgebracht. Darauf erfolgten analog zu Beispiel 1 Tempern, Metallisieren, Aufbau der Meßzelle und die Messung. Die Meßergebnisse sind in Fig. 11 und 12 dargestellt.

**Patentansprüche**

1. Referenzelektrode für chemische Sensoren auf Basis ionenselektiver Feldeffekt-Transistoren (CHEMFETs), die Isolator/Halbleiter-Substrate oder mit dünnen Filmen von Phthalocyaninato-Polysiloxan-Polymeren beschichtete Isolator/Halbleiter-Substrate in einem Elektrolyt/Isolator/Halbleiter (EIS)-System enthalten, dadurch gekennzeichnet, daß die Referenzelektrode im wesentlichen aus einem mit Polyglutamat beschichteten Isolator/Halbleiter-Substrat oder einem mit Polyglutamat überschichteten Phthalocyaninato-Polysiloxan-Polymerfilm, der auf einem Isolator/Halbleiter-Substrat angebracht ist, besteht.

2. Referenzelektrode nach Anspruch 1, dadurch gekennzeichnet, daß das Polyglutamat nach der Langmuir-Blodgett-Technik auf das Isolator/Halbleiter-Substrat oder auf den auf einem Isolator/Halbleiter-Substrat angebrachten Phthalocyaninato-Polysiloxan-Polymerfilm aufgebracht worden ist.

3. Referenzelektrode nach einem der vorhergehenden Ansprüche, dadurch gekennzeichnet, daß als Polyglutamat ein Poly($\gamma$-methyl-L-glutamat-co-$\gamma$-n-alkyl-L-glutamat), worin n-Alkyl für $C_{10}H_{21}$ bis $C_{25}H_{51}$ steht und der n-Alkyl-L-glutamat-Anteil zwischen 20 und 40 % ist, eingesetzt wird.

4. Referenzelektrode nach einem der vorhergehenden Ansprüche, dadurch gekennzeichnet, daß das Polyglutamat in einer Schichtdicke von 3,6 bis 180 nm auf dem, gegebenenfalls mit einem Phthalocyaninato-Polysiloxan-Polymerfilmbeschichteten, Isolator/Halbleiter-Substrat aufgebracht worden ist.

5. Referenzelektrode nach einem der vorhergehenden Ansprüche, dadurch gekennzeichnet, daß als Isolator/Halbleiter-Substrat ein $SiO_2$/Si-Substrat eingesetzt wird.

6. Referenzelektrode nach einem der vorhergehenden Ansprüche, dadurch gekennzeichnet, daß die Referenzelektrode integrierter Bestandteil eines, gegebenenfalls mit einem Phthalocyaninato-Polysiloxan-Polymerfilm beschichteten, $SiO_2$/Si-Substrat in einem EIS-System ist.

# FIG. 1

# FIG. 2

# FIG. 3

# FIG. 4

# FIG. 5

# FIG. 6

# FIG. 7

# FIG. 8

FIG. 9

FIG. 10

FIG. 11

# FIG. 12

EP 0 460 435 A2